# EUROPÄISCHE PATENTSCHRIFT

(11) **EP 3 268 845 B1**
(45) Veröffentlichungstag und Bekanntmachung des Hinweises auf die Patenterteilung: **29.04.2020**
(21) Anmeldenummer: 16709341.8
(22) Anmeldetag: 08.03.2016
(51) Int. Cl.: G06F 3/01, G06F 3/0338, G06F 3/038, G05G 9/047

(54) **BEDIENELEMENT MIT VON DER DETEKTIONSRICHTUNG ABHÄNGIGEM HAPTISCHEM FEEDBACK**
OPERATOR CONTROL ELEMENT WITH HAPTIC FEEDBACK WHICH IS DEPENDENT ON THE DETECTION DIRECTION
ÉLÉMENT DE COMMANDE AVEC RÉTROACTION HAPTIQUE DÉPENDANT DU SENS DE DÉTECTION

(30) Priorität: 09.03.2015 DE 102015103407
(43) Veröffentlichungstag der Anmeldung: 17.01.2018
(73) Patentinhaber: Preh GmbH, 97616 Bad Neustadt a. d. Saale (DE)
(72) Erfinder: JEITNER, Martin, 97645 Ostheim (DE); KLEIN, Markus, 97616 Salz (DE); KRAMLICH, Andreas, 97616 Bad Neustadt a. d. Saale (DE); LUST, Matthias, 97456 Dittelbrunn (DE); SCHMIDT, Benedikt, 97650 Fladungen (DE)
(74) Vertreter: Lohmanns, Bernard
(86) Internationale Anmeldenummer: PCT/EP2016/054895
(87) Internationale Veröffentlichungsnummer: WO 2016/142373

(56) Entgegenhaltungen:
- EP-A1- 2 395 414
- US-A- 5 959 613
- US-A1- 2004 095 369
- US-A1- 2004 135 770
- US-A1- 2009 076 676
- US-A1- 2011 043 447
- US-A1- 2013 033 366

## Beschreibung

Die Erfindung betrifft ein Bedienelement mit einem Betätigungsteil, welches ferner einen auf das Betätigungsteil einwirkenden Aktor zur Erzeugung eines haptischen Feedbacks aufweist. Der Aktor ist ausgelegt, eine Bewegungsanregung im Wesentlichen in einer Anregungsrichtung und beispielsweise eine rein translatorische Bewegung des Betätigungsteils zu bewirken. Bei derartigen Bedienelementen mit bezüglich der Anregungsrichtung unterschiedlich ausgerichteten Betätigungs- bzw. Detektionsrichtungen und sich daraus gegebenenfalls er- gebenden verschiedenen Betätigungsflächen stellt sich das Problem, dass das an die Hand oder den Finger des Bedieners zu übermittelnde haptische Feedback mit der jeweiligen Detektionsrichtung entweder nicht oder je nach mechanischer Auslegung der Lagerung des Betätigungsteils an der Basis und/oder wegen der Gestalt des Betätigungsteils aber auch aufgrund der Auswirkung der Betätigung auf den Aktor unerwünscht stark variiert.

Die US 2009/076676 A1 und die US 2004/095369 A1 offenbaren jeweils ein Bedienelement gemäß dem Oberbegriff von Anspruch 1. EP 2 395 414 A1 offenbart ein Verfahren zur Detektion von Betätigungen auf einer berührempfindlichen Anzeige, bei dem Kraftwerte der Betätigung ermittelt werden und das haptische Feedback basierend auf den Kraftwerten verändert wird.

Diesen Nachteil entdeckend, haben sich die Erfinder die Aufgabe gestellt, ein Bedienelement mit mehreren, bezüglich der Anregungsrichtung des haptischen Feedbacks unterschiedlich ausgerichteten Detektionsrichtungen dahingehend weiterzuentwickeln, dass das auf die Betätigungsfläche wirkende und damit an der Hand oder dem Finger des Bedieners wahrgenommene haptische Feedback bei unterschiedlicher Betätigung bezogen auf die mehreren Detektionsrichtungen durch Variation aneinander angeglichen, also "harmonisiert", werden kann, d.h. damit als zumindest nahezu übereinstimmend wahrgenommen werden kann. Diese Aufgabe wird durch ein Bedienelement gemäß Anspruch 1 gelöst. Eine gleichermaßen vorteilhafte Verwendung ist Gegenstand des Verwendungsanspruchs. Ein gleichermaßen vorteilhaftes Verfahren zur Haptikerzeugung ist Gegenstand des nebengeordneten Verfahrensanspruchs. Vorteilhafte Ausgestaltungen des Bedienelements sind jeweils Gegenstand der abhängigen Ansprüche. Die Beschreibung, insbesondere im Zusammenhang mit den Figuren, charakterisiert und spezifiziert die Erfindung zusätzlich.

Die Erfindung betrifft ein Bedienelement, welches eine Basis aufweist. Die Basis ist bei einer Verwendung im Kraftfahrzeug beispielsweise mit dem Fahrzeug, beispielsweise einem Armaturenbrett oder einer Konsole fest verbunden. Die Basis besteht beispielsweise ganz oder teilweise aus einem thermoplastischen Kunststoff oder einer Zinkdruckgusslegierung. Erfindungsgemäß ist ein an der Basis beweglich gelagertes Betätigungsteil vorgesehen. Ferner ist erfindungsgemäß ein an der Basis befestigter, auf das Betätigungsteil einwirkender elektrischer Aktor vorgesehen, um das Betätigungsteil in einer Anregungsrichtung mittels eines elektrischen Anregungssignals zur Erzeugung eines haptischen Feedbacks bewegend anzutreiben. Beispielsweise ist der Aktor ein elektromotorischer Aktor. Erfindungsgemäß sind ferner Mittel zur Detektion einer Betätigung des Betätigungsteils in wenigstens zwei Detektionsrichtungen vorgesehen, wobei die durch diese Mittel auflösbaren Detektionsrichtungen jeweils einen anderen Winkelbetrag, beispielsweise 0°, 45°, 90° oder 180° mit der Anregungsrichtung einschließen. Die Anregungsrichtung im Sinne der Erfindung bestimmt sich im Wesentlichen durch die Wirkrichtung des Aktors insbesondere der Richtung, in der eine Bewegung des Betätigungsteils aus einer Ruhestellung des Betätigungsteils initiiert wird.

Der hierin verwendete Begriff Betätigung ist weit auszulegen. Es kommt nicht zwingend auf eine Bewegung des Betätigungsteils, sondern es reicht das Einwirken einer Betätigungskraft auf das Betätigungsteil. Erfindungsgemäß umfasst sind somit solche Betätigungen, bei denen das Betätigungsteil aufgrund seiner Bewegungsfreiheitsgrade eine Bewegung bei einer Betätigung in eine den Freiheitsgraden entsprechende Detektionsrichtung erfährt aber auch solche, bei denen eine Berührung einer durch die zugehörigen Detektionsmittel berührempfindlichen Fläche erfolgt und es dabei nicht zwingend zu einer Bewegung des Betätigungsteils oder Teilen davon kommt. Anders ausgedrückt, der Begriff Betätigung soll nicht zwingend eine durch die Betätigung bewirkte Bewegung des Betätigungsteils implizieren. Entsprechend ist der Begriff Detektionsrichtung weit auszulegen. Die erfindungsgemäße Detektionsrichtung ergibt sich somit nicht zwingend aus der Richtung der durch die Betätigung bewirkten Bewegung, sondern ist letztlich durch die Mittel zur Detektion und deren Auflösungsvermögen definiert, also durch die detektierbaren aller möglichen Betätigungsrichtungen bestimmt. Beispielsweise sind Ausführungsformen denkbar, bei denen die einwirkende Betätigungskraft umgelenkt wird und die unterschiedlichen Detektionsrichtungen durch die unterschiedlichen Einwirkorte der umgelenkten Betätigungskraft auf eine berührempfindliche Oberfläche aufgelöst werden. Beispielsweise kann eine durch Betätigung bewirkte Bewegung gegebenenfalls auch erst nach Überschreiten einer vorgegeben Mindestbewegung (Toleranz) in einen vorgegebenen Winkelbereich fallen, um als Betätigung in eine der Detektionsrichtungen detektiert zu werden.

In einer Ausgestaltung liegen die Detektionsrichtungen oder deren Parallelen in einer Ebene mit der Anregungsrichtung. Bevorzugt liegt wenigstens eine der wenigstens zwei Detektionsrichtungen außerhalb einer durch die Anregungsrichtung und die jeweils andere Detektionsrichtung aufgespannte Ebene. Gemäß einer anderen bevorzugten Ausgestaltung sind die vorgesehenen Detektionsrichtungen entweder parallel oder orthogonal zur Anregungsrichtung.

Da die Betätigung eben nicht zwingend eine Bewegung des Betätigungsteils impliziert, sind die Mittel zur Detektion einer Betätigung des Betätigungsteils gemäß einer Variante so ausgelegt, dass sie eine Berührdetektion auf einer zur Detektionsrichtung orthogonalen Berührfläche und/oder eine Bewegungsdetektion in einer zur Detektionsrichtung parallelen Richtung durchführen.

Gemäß einer anderen Variante wird die Betätigung anhand einer Bewegung des Betätigungsteils detektiert. Beispielsweise erfolgt die Bewegungsdetektion mit Mitteln, die optisch, magnetisch, kapazitiv, induktiv oder akustisch die durch die Betätigung bewirkte Auslenkung detektieren oder es ist ein Kraftsensor vorgesehen. Bevorzugt ist ein kapazitiver Kraftsensor vorgesehen, um die Bewegung zu detektieren. Die Detektion erfolgt beispielsweise anhand des Vergleichs des gemessenen Ergebnisses mit einem vorgegebenen Schwellwert.

Erfindungsgemäß ist ferner eine Auswerteinheit vorgesehen, die ausgelegt ist, falls eine Betätigung in einer der zwei Detektionsrichtungen detektiert wird, in Abhängigkeit des Ergebnisses, betreffend in welche der zwei Detektionsrichtungen betätigt wurde, den Aktor mit einem spezifischen, elektrischen Anregungssignal anzutreiben. Spezifisch im Sinne meint, dass die elektrischen Anregungssignale sich unterscheiden, sollte entweder nur die eine oder nur die andere Detektionsrichtung detektiert worden sein. Die spezifischen, elektrischen Anregungssignale werden in einer Look-Up-Tabelle vorgespeichert hinterlegt.

Somit wird Detektionsrichtungsabhängig das elektrische Anregungssignal für die Ansteuerung des Aktors variiert. Durch diese Individualisierung des haptischen Feedbacks kann in einem einfachen Fall dem Bediener ein spezifischeres Feedback gegeben werden, weil sich dieses auf die spezifische Detektionsrichtung bezieht und somit der Bediener nicht nur über die Rückmeldung die Information darüber erhält, dass eine Betätigung erfolgt ist, sondern ferner auch eine spezifizierte Information, in welche der wenigstens zwei Detektionsrichtungen eine Betätigung erfolgt ist. Bevorzugt sind die spezifischen, auch detektionsrichtungsspezifischen genannt, elektrischen Anregungssignale so gewählt, dass sich das haptische Feedback in der Wahrnehmung angleicht. Beispielsweise wird durch empirische Ermittlung oder durch mathematische Modellbildung, bspw. Modelanalyse, die Systemantwort des Betätigungsteils bzw. des Bedienelements ermittelt und durch geeignete Wahl des Ausgangssignal, beispielsweise dessen zeitliche Verlauf, wie An- und Abstiegsverhalten ein hoher Grad an Übereinstimmung betreffend die verschiedenen Detektionsrichtungen erreicht.

Gemäß einer bevorzugten Ausgestaltung ist die Auswerteinheit ausgelegt, für den Fall, dass zwei Detektionsrichtungen gleichzeitig detektiert wurden, ein weiteres spezifisches elektrisches Anregungssignal zu erzeugen und damit den Aktor anzutreiben. Damit ergeben sich drei spezifische, in wenigstens einer Kenngröße unterscheidbare elektrische Anregungssignale. Dieses kann beispielsweise durch Mittelung aus den zwei vorgenannten, spezifischen, elektrischen Anregungssignalen erzeugt werden.

Gemäß einer weiteren Variante ist vorgesehen, dass die zugehörigen Mittel zur Detektion sich bezüglich wenigstens zwei Detektionsrichtungen in der Bauart unterscheiden. Beispielsweise ist eine resistive oder kapazitive Sensorik für die Berührungsdetektion in einer Detektionsrichtung zuständig, während die Betätigung entlang der verbleibenden Detetionsrichtungen durch eine kapazitive Kraftsensorik oder eine berührungslos arbeitende, wie magnetische oder optische, Bewegungssensorik detektiert wird. Die bevorzugte Kombination aus einer Berührdetektion mit anderen Detektionsarten hat zudem den Vorteil, dass anhand der Detektion beispielsweise bei einer gleichzeitigen Betätigung in zwei Betätigungsrichtung einschließlich der der Berührdetektion die Weise erfassbar ist, in der der Bediener das Betätigungsteil mit der Hand erfasst bzw. mit dem Finger berührt, um anhand dessen das haptische Feedback zu variieren.

Der Aktor ist ein das Betätigungsteil linear antreibender Aktor, beispielsweise ein piezoelektrischer Aktor. Noch bevorzugter handelt es sich um einen elektrodynamischen, beispielsweise elektromotorischen, oder um einen elektromagnetischen Aktor. Bei den linear arbeitenden Aktoren im Allgemeinen aber insbesondere bei einem elektrodynamischen oder elektromagnetischen Aktor besteht nämlich das Problem, dass mit der Betätigung regelmäßig eine der Betätigung entsprechende Relativverschiebung zwischen dem Betätigungsteil und der Basis bewirkt wird und dass je nach Richtung dieser Relativverschiebung diese Auswirkung auf die Antriebsleistung haben kann, weil dadurch beispielsweise die relative Ausrichtung, gegebenenfalls die auf das Betätigungsteil wirkenden Rückstellkräfte einer gegebenenfalls elastisch rückstellenden Lagerung aber vor Allem damit die magnetische Wechselwirkung der zusammenwirkenden Komponenten des Aktors und letztlich der Arbeitspunkt des Aktors vor und während der Erzeugung des haptischen Feedbacks verändert wird.

Es hat sich gezeigt, dass insbesondere elektrodynamische und elektromagnetische Aktoren empfindlich auf eine Auslenkung aus der Ruhestellung reagieren und hier erhöhter Anpassungsbedarf bezüglich des elektrischen Anregungssignals besteht, um das haptische Feedback im Falle der unterschiedlichen Betätigungsrichtungen zu "harmonisieren".

Gemäß einer bevorzugten Ausgestaltung ist das elektrische Anregungssignal jeweils ein Impulssignal oder ein Impulsfolgesignal, beispielsweise handelt es sich um ein Gaußimpuls oder Dreiecksimpuls bzw. um eine Folge daraus.

Bevorzugt ist vorgesehen, dass das elektrische, für die Ansteuerung des Aktors vorgesehene Anregungssignal ein Beschleunigungsrechteckimpuls umfasst und die spezifischen, elektrischen Anregungssignale ausschließlich bezüglich des Tastverhältnisses des Beschleunigungsrechteckimpulses variieren. Beschleunigungsrechteckimpuls im Sinne der Erfindung meint, dass das elektrische Anregungssignal zur Ansteuerung des Aktors einen die Bewegung des Betätigungsteils aus seiner Ruhestellung initiierenden ersten Impuls bzw. Rechteckimpuls umfasst. Es hat sich gezeigt, dass mittels Variation des Tastverhältnisses eine einfache Möglichkeit besteht, beim Bediener trotz unterschiedlicher Detektionsrichtung einen haptisch nicht unterscheidbaren Sinneseindruck zu erzeugen. Rechteckimpulse werden durch Pulsweitenmodulation erzeugt, die zugehörigen Verfahren sind dem Fachmann bekannt und sind nicht Gegenstand der vorliegenden Erfindung. Noch bevorzugter unterscheiden sich die detektionsrichtungsspezifischen, elektrischen Anregungssignale ausschließlich bezüglich der Maximalamplitude.

Bevorzugt variiert die Maximalamplitude in Abhängigkeit des Winkelbetrags, den die Detektionsrichtung mit der Anregungsrichtung einschließt. Beispielsweise nimmt ausschließlich die Maximalamplitude mit zunehmendem Winkelbetrag ab oder zu.

Gemäß einer bevorzugten Ausgestaltung ist das Anregungssignal eine Folge ausschließlich aus einem Beschleunigungsimpuls und einem Bremsimpuls. Bevorzugt weisen für alle spezifischen, elektrischen Anregungssignale sowohl der Beschleunigungsimpuls als auch der Bremsimpuls übereinstimmende Richtung auf. Bevorzugt ist der zeitliche Abstand zwischen Beschleunigungsimpuls und Bremsimpuls für alle spezifischen, elektrischen Anregungssignale identisch.

Der Begriff Beschleunigungsimpuls im Sinne der Erfindung meint, dass das Anregungssignal einen die Bewegung des Betätigungsteils aus seiner Ausgangsstellung initiierenden ersten Impuls umfasst, wohingegen der Bremsimpuls dadurch definiert ist, dass er eine die initiierende Bewegung bremsende Wirkung hat, wobei die initiierende Bewegung eine Bewegung in ausschließlich eine Richtung oder eine Abfolge aus einer Hin- und Rückbewegung sein kann. Beispielsweise ist der Bremsimpuls ein Gaußimpuls, Dreieckimpuls oder Rechteckimpuls. Der Bremsimpuls kann ferner je nach Auslegung des Aktors eine zum Beschleunigungsimpuls gleiche oder entgegengesetzte Polarität aufweisen.

Gemäß einer Ausgestaltung ist die Lagerung des Betätigungsteils an der Basis so ausgestaltet, dass sich eine selbstständige elastische, gegebenenfalls mechanisch gedämpfte Rückstellung in eine Ruhestellung des Betätigungsteils ergibt. Bei einem sich so ergebenden schwingenden System erfolgt der Bremsimpuls bevorzugt in einem zeitlichen Abstand nach dem Beschleunigungsimpuls. Bevorzugt ist vorgesehen, dass die spezifischen, elektrischen Anregungssignale sich nicht in dem zeitlichen Abstand von Beschleunigungsimpuls und Bremsimpuls unterscheiden. Der Bremsimpuls erfolgt beispielsweise so, dass das Überschwingen des schwingenden Systems verringert oder gar vermieden wird.

Bevorzugt ist das Betätigungsteil eine dreidimensionale Erhebung, dessen Flanken u.a. die Betätigungsflächen definieren. Beispielsweise handelt es sich bei dem Betätigungsteil um einen Drehknopf, bei dem mittels Drehstellungsdetektion um eine Drehachse eine erste Schaltfunktionalität verwirklicht ist und bei dem durch eine zusätzliche zur Drehachse parallele Beweglichkeit des Betätigungsteils oder eine Berührdetektion auf einer dem Bediener zugewandten Stirnfläche des Drehknopfes eine zusätzliche Schaltfunktionalität bereitgestellt wird. Die ein haptisches Feedback erzeugende Anregung durch einen Aktor erfolgt beispielsweise in einer zur Drehachse senkrechten Richtung.

Bevorzugt ist das Bedienelement ein Joystick mit einer schwenk- oder schiebebeweglichen Lagerung des Betätigungsteils.

Die Erfindung betrifft ferner die Verwendung des Bedienelements in einer der zuvor beschriebenen Ausführungsformen in einem Kraftfahrzeug.

Die Erfindung betrifft ferner ein Verfahren zur Haptikerzeugung bei einem Bedienelement, wobei das Verfahren folgende Schritte aufweist. In einem Bereitstellungsschritt wird eine Basis, ein an der Basis beweglich gelagerten Betätigungsteil, ein elektrischer Aktor, um das Betätigungsteil in einer Anregungsrichtung mittels eines elektrischen Anregungssignals zur Erzeugung eines haptischen Feedbacks bewegend anzutreiben und Mittel zur Detektion einer Betätigung des Betätigungsteils in wenigstens zwei Detektionsrichtungen, die jeweils einen anderen Winkelbetrag mit der Anregungsrichtung einschließen, bereitgestellt. In einem erfindungsgemäßen Detektionsschritt erfolgt eine Detektion einer Betätigung in einer der wenigstens zwei Detektionsrichtungen.

In einem nachfolgenden Schritt kommt es zur Erzeugung eines spezifischen, elektrischen Anregungssignals für den Aktor, falls eine Betätigung in einer der zwei Detektionsrichtungen detektiert wurde, wobei das Anregungssignal in Abhängigkeit des Ergebnisses, betreffend in welche der zwei Detektionsrichtungen betätigt wurde, variiert.

In einem mit dem zuvor beschriebenen Schritt simultanen oder zeitlich nachversetzten Schritt erfolgt ein Anregen des Aktors mit dem spezifischen, elektrischen Anregungssignals, falls eine Betätigung in einer der zwei Detektionsrichtungen detektiert wurde.

Somit wird Detektionsrichtungsabhängig das Anregungssignal des Aktors variiert. Durch diese Individualisierung des haptischen Feedbacks kann in einem einfachen Fall dem Bediener ein spezifischeres Feedback gegeben werden, weil sich dieses auf die spezifische Detektionsrichtung bezieht und somit der Bediener nicht nur über die Rückmeldung die Information darüber erhält, dass eine Betätigung erfolgt ist, sondern ferner auch eine spezifizierte Information, in welche der wenigstens zwei Detektionsrichtungen eine Betätigung erfolgt ist. Bevorzugt sind die Detektionsrichtungsspezifischen, elektrischen Anregungssignale so gewählt, dass sich das haptische Feedback in der Wahrnehmung angleicht. Beispielsweise wird durch empirische Ermittlung oder durch mathematische Modellbildung, bspw. Modalanalyse, die Systemantwort des Betätigungsteils bzw. des Bedienelements ermittelt und durch geeignete Wahl des Ausgangssignal, beispielsweise dessen zeitliche Verlauf, wie An- und Abstiegsverhalten ein hoher Grad an Übereinstimmung betreffend die verschiedenen Detektionsrichtungen erreicht.

In einer bevorzugten Ausführungsform des Verfahrens ist der Aktor ausgelegt, das Betätigungsteil ausschließlich linear anzutreiben. Noch bevorzugter handelt es sich um einen elektrodynamischen, beispielsweise elektromotorischen, oder um einen elektromagnetischen Aktor. Bei den linear arbeitenden Aktoren im Allgemeinen aber insbesondere bei einem elektrodynamischen oder elektromagnetischen Aktor besteht nämlich das Problem, dass mit der Betätigung regelmäßig eine der Betätigung entsprechende Relativverschiebung zwischen dem Betätigungsteil und der Basis bewirkt wird und dass je nach Richtung dieser Relativverschiebung diese Auswirkung auf die Antriebsleistung haben kann, weil dadurch beispielsweise die relative Ausrichtung und damit die magnetische Wechselwirkung der zusammenwirkenden Komponenten des Aktors und letztlich der Arbeitspunkt des Aktors vor und während der Erzeugung des haptischen Feedbacks verändert wird.

Gemäß einer bevorzugten Variante des erfindungsgemäßen Verfahrens wird das spezifische, elektrische Anregungssignal ausgewählt, eine durch die Betätigung des Betätigungsteils bewirkte Arbeitspunktverschiebung des Aktors zu kompensieren. Es hat sich gezeigt, dass alle Aktoren, aber insbesondere elektrodynamische und elektromagnetische Aktoren empfindlich auf eine Auslenkung aus deren Ruhestellung reagieren, die sich nach der Betätigung und vor der elektrischen Ansteuerung einstellt, weil dies eine Arbeitspunktverschiebung bewirkt und somit Einfluss auf das erzeugte haptische Feedback hat. Hier besteht somit erhöhter Anpassungsbedarf nach erfolgter Betätigung das elektrische Anregungssignals entsprechend anzupassen mit dem Ziel, das haptische Feedback im Falle der unterschiedlichen Betätigungsrichtungen zu "harmonisieren".

Gemäß einer bevorzugten Variante des Verfahrens ist das elektrische Anregungssignal jeweils ein Impulssignal oder ein Impulsfolgesignal.

Gemäß einer weiteren Ausgestaltung des erfindungsgemäßen Verfahrens wird ferner mittels Mitteln zur Berührdetektion eine Berührung des Betätigungsteils detektiert, um in Abhängigkeit des Ergebnisses der Berührdetektion das spezifische, elektrische Anregungssignal zu variieren. Dadurch wird beispielsweise in Abhängigkeit der am Betätigungsteil aufgrund der Art der Berührung durch die Hand oder den Finger des Bedieners vorliegenden Berührsituation die Haptikerzeugung variiert. Beispielsweise wird aufgrund einer positiven Detektion auf einer berührempfindlichen Fläche, eine betätigende Berührung durch einen Finger des Bedieners angenommen, und die Haptikerzeugung mittels eines spezifischen, elektrischen Anregungssignals variiert.

Gemäß einer bevorzugten Ausgestaltung des erfindungsgemäßen Verfahrens ist der Schritt des Ermittelns ausgelegt, für den Fall, dass zwei Detektionsrichtungen gleichzeitig detektiert wurden, ein weiteres spezifisches elektrisches Anregungssignal zu erzeugen und damit den Aktor anzutreiben. "Gleichzeitig" ist nicht eng auszulegen und meint auch den Fall eines in ein gemeinsames Auswerteintervall fallendes Betätigen, ohne dass absolute Zeitgleichheit vorliegt. Damit ergeben sich beispielsweise wenigstens drei spezifische, in wenigstens einer Kenngröße unterscheidbare, elektrische Anregungssignale. Beispielsweise wird eine elektrische Kenngröße, wie die Maximalamplitude des spezifischen, elektrischen Anregungssignals durch das Betragsverhältnis des Detektionsergebnisses in den betroffenen Detektionsrichtungen bestimmt.

Bevorzugt ist vorgesehen, dass das Anregungssignal jeweils einen Beschleunigungsrechteckimpuls umfasst und die spezifischen, elektrischen Anregungssignale ausschließlich bezüglich des Tastverhältnisses noch bevorzugter ausschließlich bezüglich der Maximalamplitude des Beschleunigungsrechteckimpulses variieren.

Bevorzugt ist das Anregungssignal eine Folge ausschließlich aus einem Beschleunigungsimpuls und einem Bremsimpuls.

Die Erfindung wird anhand der nachfolgenden Figuren näher erläutert. Die Figuren sind dabei nur beispielhaft zu verstehen und stellen lediglich eine bevorzugte Ausführungsvariante dar. Es zeigen:
- Fig. 1: eine schematische Darstellung einer Ausführungsform des erfindungsgemäßen Bedienelementes,
- Fig. 2a und 2b: jeweils eine schematische, jeweils überlagerte zeitabhängige Darstellung von Detektionsrichtung spezifischen, elektrischen Anregungssignalen, aufweisend einen Beschleunigungsimpuls und einen Bremsimpuls samt zugehörigem Weg/Zeit-Diagramm des Betätigungsteils,
- Fig. 3 und 4: eine zweite Ausführungsform des erfindungsgemäßen Bedienelements ;
- Fig. 5a bis 5c: eine dritte Ausführungsform des erfindungsgemäßen Bedienelements.

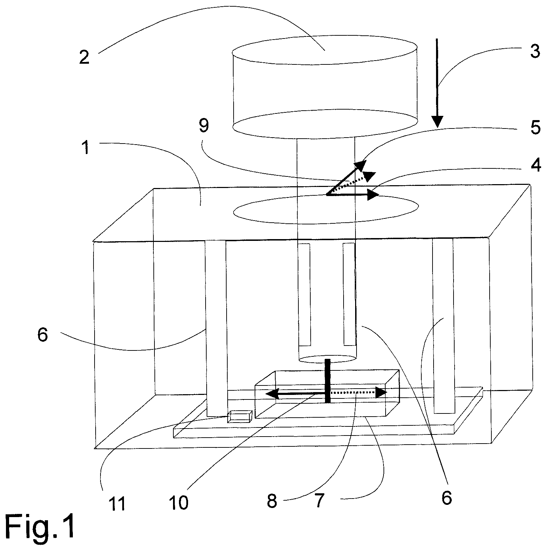

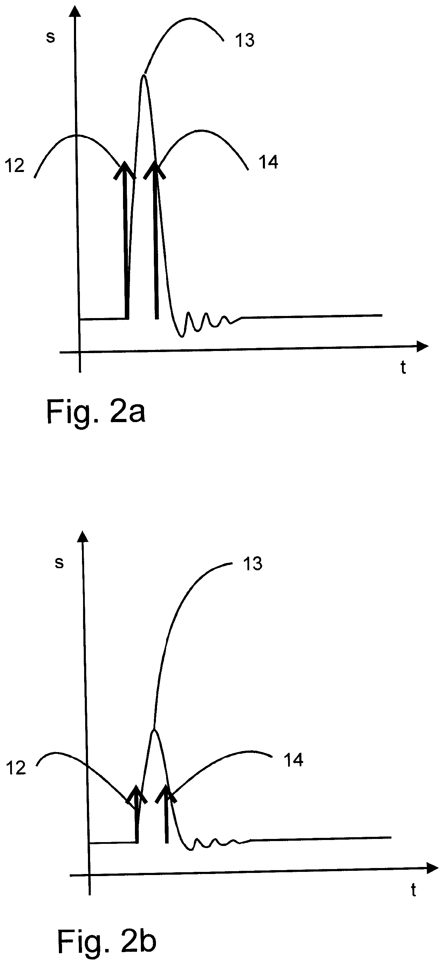

Das an der Basis 1 beweglich gelagerte Betätigungsteil 2, kann beispielsweise in einer durch die Pfeile 4 und 5 aufgespannten Ebene und senkrecht zu dieser Ebene in einer Richtung 3 bewegt werden. Die nicht näher dargestellte Lagerung des Betätigungsteils 2 an der Basis 1 ist so ausgestaltet, dass sich eine selbstständige elastische, gegebenenfalls mechanisch gedämpfte Rückstellung in die in Figur 1 gezeigte Ruhestellung des Betätigungsteils 2 ergibt. Es sind ferner Mittel zur Detektion 6 vorgesehen, die die Bewegung des Betätigungsteils 2 aus der Ruhestellung detektieren. Die Bewegungsdetektion erfolgt beispielsweise mittels wenigstens eines optischen oder wenigstens eines magnetischen Sensors oder mittels wenigstens eines Kraftsensors oder mittels Kombinationen daraus. Die eingezeichneten Detektionsrichtungen 3, 4 und 5 sind diejenigen Detektionsrichtungen die durch die Detektionsmittel 6 u.a. auflösend detektiert werden. Die Betätigungsdetektion erfolgt somit entlang dreier Detektionsrichtungen 3, 4 und 5 und das zugehörige Detektionsergebnis wird in der Auswerteeinheit 11 ausgewertet. Die Auswerteinheit 11 gibt, zurückgreifend auf eine Lock-Up-Tabelle oder unter Verwendung eines mathematischen Algorithmus ein spezifisches, elektrisches Anregungssignal an einen Aktor 7 aus. Mittels dieses elektrischen Anregungssignals wird der Aktor 7 angetrieben. Der elektromagnetisch linear antreibende Aktor 7 erzeugt dem spezifischen, elektrischen Anregungssignal entsprechend, linear entlang der Anregungsrichtung 10 ein haptisches Feedback, indem der Aktor 7 auf das Betätigungsteil 2 einwirkend dieses aus der Ruhestellung antreibt. Die Anregungsrichtung 10 ist, wie Figur 2 zeigt, parallel zu der durch die Detektionsrichtungen 4 und 5 aufgespannten Ebene. Wie der Figur 1 zu entnehmen ist, schließen die durch die Detektionsmittel 6 definierten Detektionsrichtungen 3, 4 und 5 jeweils betragsmäßig einen anderen Winkel mit der Anregungsrichtung 10 ein. Die für alle spezifischen, elektrischen Anregungssignale gleiche Anregungsrichtung 10 wird dabei durch einen Beschleunigungsimpuls definiert, in der das Betätigungsteil 2 aus seiner Ruhelage ein haptisches Feedback erzeugend angetrieben wird, wobei die Richtung des gestrichelten Pfeils 8 die Wirkrichtung eines zu allen spezifischen, elektrischen Anregungssignal gehörigen, dem Beschleunigungsimpuls zeitlich nachfolgenden Bremsimpuls verdeutlichen soll.

Das spezifische, elektrische Anregungssignal weist, wie in den Figur 2a und 2b gezeigt, einen die Bewegung des Betätigungsteils aus seiner Ruhestellung initiierenden ersten Beschleunigungsimpuls 12 in Anregungsrichtung 10 und einen der initiierenden Bewegung entgegengesetzten zweiten, zeitlich nachfolgenden Bremsimpuls 14 auf. In zeitlich überlagerte Darstellung ist der Weg/Zeit-Verlauf des frei beweglichen, nur durch den Aktor angetriebenen Betätigungsteils dargestellt, um die Systemantwort des Betätigungsteils auf das Anregungssignal zu verdeutlichen. Es wird deutlich, dass der Bremsimpuls 14 zeitlich nach Erreichen der maximalen Auslenkung erfolgt. Die Figuren 2a und 2b unterscheiden sich ausschließlich in der Amplitude von Beschleunigungsimpuls 12 und Bremsimpuls 14 und damit im vom Betätigungsteil beschriebenen Bewegungsablauf in der Weg/Zeit-Darstellung, welches im Wesentlichen hinsichtlich der Maximalamplitude 13 der Auslenkung des Aktors 7 variiert. Das in der Figur 2a gezeigte Anregungssignal und das zugehörige Bewegungsdiagramm entsprechen beispielsweise dem, welches beispielsweise bei einer Bewegung des Betätigungsteils in Richtung des Pfeils 4 aus Figur 1 erzeugt wird, während die in Figur 2b gezeigten Abläufe einer Detektion einer Betätigung in Richtung des Pfeils 3 entsprechen. Aufgrund der detektionsrichtungsabhängigen Variation der Maximalamplitude erhält der Bediener ein für den Sinneseindruck nicht unterscheidbares haptisches Feedback.

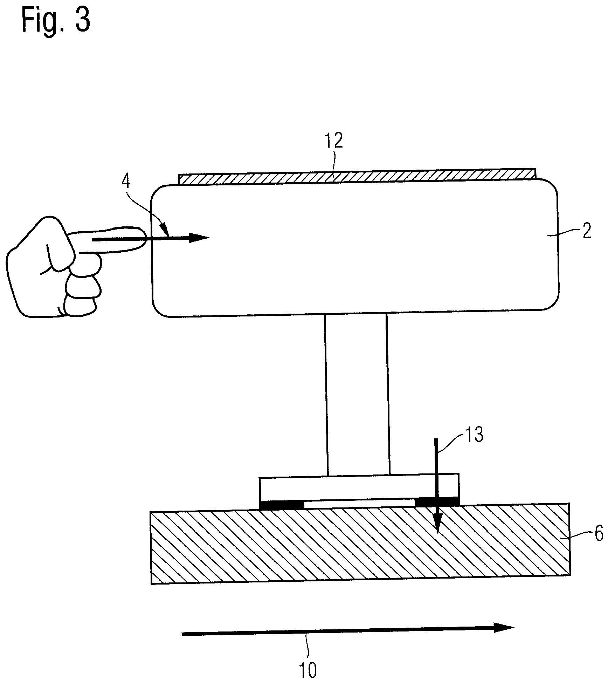

Die Figur 3 zeigt in schematischer Darstellung eine weitere, zweite Ausführungsform des erfindungsgemäßen Bedienelements. Das Betätigungsteil 2 wirkt auf eine berührempfindliche Eingabefläche eines ortauflösenden Touchpads oder Touchscreens 6 als Detektionsmittel. Anhand der ortsauflösenden Bestimmung des Einwirkortes des Betätigungsteils 2 auf dem Touchpad oder Touchscreen 6, sind die möglichen Detektionsrichtungen zu bestimmen. Beispielsweise ist aufgrund der Einwirkung am Ort 13 die mit dem Pfeil 4 angedeutete Detektionsrichtung detektierbar und von einer entgegengesetzten, nicht dargestellten Betätigung durch Einwirkung auf einer entgegengesetzten Seite des Betätigungsteils 2 unterscheidbar. Mit der Detektion einer solchen Betätigung wird ein haptisches Feedback in Richtung des Pfeils 10 ausgelöst, die durch einen nicht dargestellten Aktor in einer linearen und zum Touchpad bzw. Touchscreen 6 parallelen Richtung auf das Touchpad bzw. den Touchscreen 6 einwirkt.

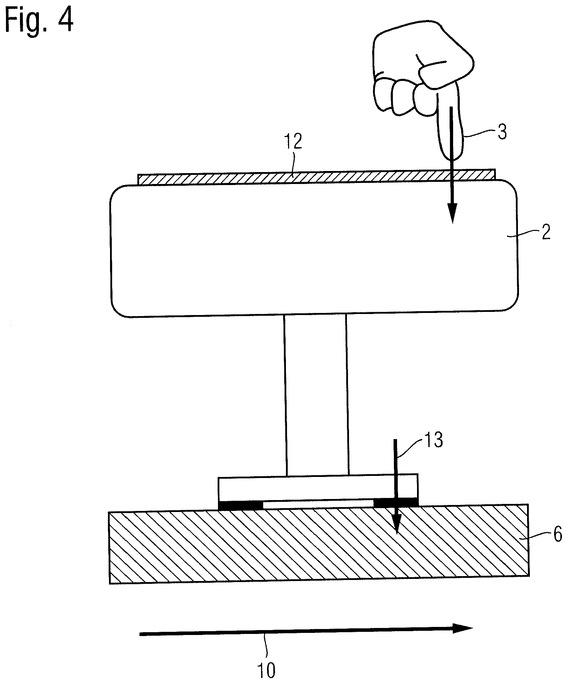

Da wie in der Figur 4 gezeigt eine Betätigung in Richtung 3 des Betätigungsteils 2 auf der Oberseite des Betätigungsteils 2 durch das Touchpad bzw. den Touchscreen 6 nicht von einer Betätigung gemäß der Figur 3 zu unterscheiden wäre, aber für eine solche Betätigung aufgrund der anderen Fingerposition ein anderes haptisches Feedback und damit ein anderes Anregungssignal für den Aktor erwünscht ist, werden bei der vorliegenden Ausführungsform die Detektionsmittel durch Mittel zur Berührdetektion 12 auf der Oberseite des Betätigungsteils 2 ergänzt. Dadurch ist es möglich, die Auflösung der Mittel zur Detektion 6 dahingehend zu verbessern, dass eine weitere Detektionsrichtung 3 aufgelöst werden kann, und einer Betätigung in dieser Detektionsrichtung 3 ein haptisches Feedback bzw. ein spezifisches. elektrisches Anregungssignal zugeordnet werden kann, dass sich von dem unterscheidet, dass einer Betätigung in Richtung der Detektionsrichtung gemäß dem Pfeil 4 aus Figur 3 zugeordnet würde.

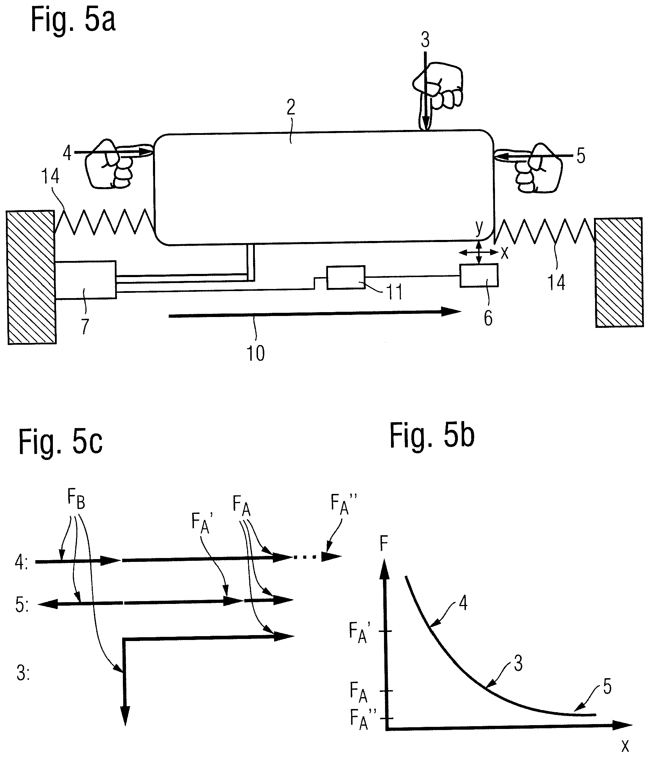

Anhand der Figuren 5a bis 5c wird eine weitere, zweite Ausführungsform des erfindungsgemäßen Bedienelements erläutert. Dieses umfasst ein durch elastische Rückstellmittel 14 in einer Ruhestellung rückstellend gehaltenes Betätigungsteil 2, welches durch einen elektromotorischen oder elektromagnetischen Aktor 7 in Richtung des Pfeils 10 angetrieben wird, um ein haptisches Feedback zu erzeugen. Das haptische Feedback 10 wird in Abhängigkeit einer Betätigung genauer in Abhängigkeit der detektierbaren Betätigungsrichtungen variiert. Die detektierbaren Betätigungsrichtungen ergeben sich aus dem Auflösungsvermögen der Mittel zur Detektion 6 und deren Detektionsrichtungen 3, 4, 5. Im vorliegenden Fall handelt es sich beispielsweise um optisch detektierende Mittel zur Detektion 6, die die Auslenkungen X, Y des Betätigungsteils 2 bei der Betätigung aus der Ruhelage detektieren und nach den drei Detektionsrichtungen 3, 4, 5 auflöst. Je nach Betätigungsmaß in den drei Detektionsrichtungen 3, 4, 5 wird das spezifische, elektrische Anregungssignal für den Aktor 7 durch die Auswerteinheit 11 während und nach erfolgter Betätigungsauslenkung des Betätigungsteils 2 veranlasst und in Abhängigkeit der dominierenden einer der drei Detektionsrichtungen 3, 4, 5 variiert. Zielsetzung dieser Variation ist, das haptische Feedback der drei den drei Detektionsrichtungen 3, 4, 5 entsprechenden Betätigungen anzugleichen. Eine Angleichung ist, wie anhand der Figur 5b verdeutlicht werden soll, schon deswegen notwendig, weil ein durch die Auslenkung X sich ergebender Versatz Auswirkungen auf den Arbeitspunkt des elektromotorischen Aktors 7 und damit auf dessen resultierende Kraftanregung F hat.

Für die unterschiedlichen Betätigungen in den drei Detektionsrichtungen 3, 4, 5 ist dies in Figur 5b gezeigt. Zur Angleichung des haptischen Feedbacks ist nun vorgesehen, dass die Auswerteinheit 11 das Anregungssignal für die den verschiedenen Betätigungen entsprechenden Fälle 4 und 5 der Figur 5c so auswählt, dass die Arbeitspunktverschiebung, die in Figur 5b gezeigt ist, zumindest teilweise kompensiert wird und sich das haptische Feedback, welches durch die Pfeile FA repräsentiert wird, für die verschiedenen Fälle zumindest annähernd gleich ausfällt. Für den Fall 4 heißt das beispielsweise, dass die durch die Betätigung in Richtung des Pfeils 4 bewirkte Arbeitspunktverschiebung des Aktors 7, die eigentlich mit einem stärken haptischen Anregung FA" einhergehenden würde , aufgrund der Verwendung eines spezifischen, im Vergleich zum Fall 3 schwächeren, elektrischen Anregungssignals dahingehend variiert wird, dass das haptische Feedback an den Fall 3 angeglichen ist. Entsprechend Umgekehrtes gilt für den Fall 5, bei dem durch die Betätigung in Richtung des Pfeils 5 auf eine Verschiebung des Arbeitspunkts und einer damit einhergehenden Abschwächung der haptischen Anregung gemäß dem Pfeil FA' mit einer Variation des Anregungssignals durch die Auswerteinheit 11 in der Form reagiert wird, dass ein spezifisches, im Vergleich zum Fall 3 stärkeres, elektrisches Anregungssignal erzeugt wird, um die Angleichung des haptischen Feedbacks an den Fall 3 zu bewirken.

## Patentansprüche

1. Bedienelement
aufweisend:
eine Basis (1);
ein an der Basis (1) beweglich gelagertes Betätigungsteil (2); einen an der Basis (1) befestigten auf das Betätigungsteil (2) einwirkenden elektrischen Aktor (7), um das Betätigungsteil (2) in einer vorgegebenen Anregungsrichtung (10) mittels eines elektrischen Anregungssignals zur Erzeugung eines haptischen Feedbacks bewegend und linear anzutreiben;
Mittel zur Detektion (6) einer durch die Betätigung bewirkten Auslenkung des Betätigungsteils (2) in zwei Detektionsrichtungen (3,4,5), die jeweils einen anderen Winkelbetrag mit der Anregungsrichtung (10) einschließen;
eine Auswerteinheit (11), die ausgelegt ist, falls eine Betätigung in einer der zwei Detektionsrichtungen (3,4,5) detektiert wird, in Abhängigkeit des Ergebnisses, betreffend in welche der zwei Detektionsrichtungen (3,4,5) betätigt wurde, den Aktor mit einem spezifischen, elektrischen Anregungssignal anzutreiben; wobei die spezifischen elektrischen Anregungssignale in einer Look-up-Tabelle vorgespeichert hinterlegt sind
**dadurch gekennzeichnet, dass**
die spezifischen elektrischen Anregungssignale gewählt sind, das haptische Feedback für unterschiedliche Ergebnisse zu harmonisieren, wobei die Auswirkungen der durch die Betätigung jeweils bewirkten Relativverschiebung zwischen dem Betätigungsteil (2) und der Basis (1) auf die Antriebsleistung des Aktors (7) kompensiert wird.

2. Bedienelement gemäß dem vorhergehenden Anspruch, wobei die Auswerteinheit (11) ausgelegt ist, falls eine Betätigung in zwei Detektionsrichtungen (9) detektiert wurde, den Aktor (7) mit einem weiteren spezifischen, elektrischen Anregungssignal anzutreiben.

3. Bedienelement gemäß einem der vorhergehenden Ansprüche, wobei die Mittel zur Detektion ferner Mittel zur Berührdetektion aufweisen, um eine Berührung des Betätigungsteils zu detektieren und die Auswerteinheit ferner ausgelegt ist, in Abhängigkeit des Ergebnisses der Berührdetektion, das elektrische Anregungssignal zu variieren,

4. Bedienelement gemäß einem der vorhergehenden Ansprüche, wobei der Aktor (7) ein elektromagnetischer Aktor oder ein elektrodynamischer Aktor, wie ein elektromotorischer Aktor ist.

5. Bedienelement gemäß einem der vorhergehenden Ansprüche, wobei das elektrische Anregungssignal jeweils einen Beschleunigungsrechteckimpuls (12) umfasst und die spezifischen, elektrischen Anregungssignale ausschließlich bezüglich des Tastverhältnisses noch bevorzugter ausschließlich bezüglich der Maximalamplitude (13) des Beschleunigungsrechteckimpulses variieren.

6. Bedienelement gemäß einem der vorhergehenden Ansprüche, wobei das elektrische Anregungssignal eine Folge aus einem Beschleunigungsimpuls (12) und einem Bremsimpuls (14) ist.

7. Bedienelement gemäß einem der vorhergehenden Ansprüche, wobei die spezifischen, elektrischen Anregungssignale in ihrer Maximalamplitude (13) in Abhängigkeit eines Winkelbetrags eines Winkels variieren, den die Detektionsrichtung (3, 4, 5) mit der Anregungsrichtung (10) einschließt.

8. Bedienelement gemäß einem der vorhergehenden Ansprüche, wobei wenigstens zwei Detektionsrichtungen (3,4,5) entweder parallel oder orthogonal zur Anregungsrichtung sind.

9. Bedienelement gemäß einem der vorhergehenden Ansprüche, wobei das Betätigungsteil (2) eine dreidimensionale Erhebung Ist, dessen Flanken die Betätigungsflächen definieren.

10. Bedienelement gemäß einem der vorhergehenden Ansprüche, wobei das Bedienelement ein Joystick mit schwenk- oder schiebebeweglichen Lagerung des Betätigungsteils (2) ist.

11. Bedienelement gemäß einem der beiden vorhergehenden Ansprüche, wobei die Anregungsrichtung parallel zu einer dem Bediener abgewandten Grundfläche des Betätigungsteils (2) liegt.

12. Verwendung des Bedienelements gemäß einem der vorhergehenden Ansprüche in einem Kraftfahrzeug.

13. Verfahren zur Haptikerzeugung bei einem Bedienelement, aufweisend die folgenden Schritte:
Bereitstellen einer Basis (1), eines an der Basis (1) beweglich gelagerten Betätigungsteils (2), eines elektrischen Aktors (7), um das Betätigungsteil (2) in einer vorgegebenen Anregungsrichtung (10) mittels eines elektrischen Anregungssignals zur Erzeugung eines haptischen Feedbacks und linear bewegend anzutreiben und Mittel zur Detektion (6) einer durch die Betätigung bewirkten Auslenkung des Betätigungsteils (2) in wenigstens zwei Detektionsrichtungen (3,4,5), die jeweils einen anderen Winkelbetrag mit der Anregungsrichtung (10) einschließen; Detektion einer Betätigung in einer der zwei Detektionsrichtungen; Erzeugen eines spezifischen, elektrischen Anregungssignals für den Aktor (7), falls eine Betätigung in einer der zwei Detektionsrichtungen (3,4,5) detektiert wurde; wobei die spezifischen elektrischen Anregungssignale in einer Look-up-Tabelle vorgespeichert hinterlegt sind;
Anregen des Aktors (7) mit dem spezifischen, elektrischen Anregungssignals (13), falls eine Betätigung in einer der Detektionsrichtungen (3,4,5) detektiert wurde;
**dadurch gekennzeichnet, dass**
die spezifischen elektrischen Anregungssignale gewählt sind, das haptische Feedback für unterschiedliche Ergebnisse zu harmonisieren, wobei die Auswirkungen der durch die Betätigung jeweils bewirkten Relativverschiebung zwischen dem Betätigungsteil (2) und der Basis (1) auf die Antriebsleistung des Aktors (7) kompensiert wird.

14. Verfahren gemäß dem vorhergehenden Anspruch, wobei nach Detektion einer gleichzeitigen Betätigung in zwei Detektionsrichtungen ein weiteres spezifisches elektrisches Anregungssignal erzeugt wird.

15. Verfahren gemäß einem der vorhergehenden Ansprüche 13 bis 14, wobei ferner mittels Mitteln zur Berührdetektion eine Berührung des Betätigungsteils detektiert wird und zusätzlich in Abhängigkeit des Ergebnisses der Berührdetektion das spezifische, elektrische Anregungssignal variiert wird.

16. Verfahren gemäß einem der vorhergehenden Ansprüche 13 bis 15, wobei der Aktor (7) ein elektromagnetischer Aktor oder ein elektrodynamischer Aktor, wie ein elektromotorischer Aktor, ist.

17. Verfahren gemäß einem der vorhergehenden Ansprüche 13 bis 16, wobei das Anregungssignal jeweils einen Beschleunigungsrechteckimpuls umfasst und die spezifischen, elektrische Anregungssignale ausschließlich bezüglich des Tastverhältnisses noch bevorzugter ausschließlich bezüglich der Maximalamplitude des Beschleunigungsrechteckimpulses variieren.

18. Verfahren gemäß einem der vorhergehenden Ansprüche 13 bis 17, wobei das Anregungssignal eine Folge ausschließlich aus einem Beschleunigungsimpuls (12) und einem Bremsimpuls (14) ist.

## Claims

1. Operating element having:
a base (1);
an actuation part (2) mounted movably on the base (1);
an electrical actuator (7), fastened to the base (1) and acting on the actuation part (2) in order to drive the actuation part (2) in motion and linearly in a predefined excitation direction (10) by way of an electrical excitation signal in order to generate haptic feedback;
detection means (6) for detecting a deflection, brought about by the actuation, of the actuation part (2) in two detection directions (3, 4, 5) that each enclose a different angular magnitude with the excitation direction (10) ;
an evaluation unit (11) that is designed to drive the actuator with a specific electrical excitation signal if actuation in one of the two detection directions (3, 4, 5) is detected depending on the result with regard to which of the two detection directions (3, 4, 5) actuation took place in; wherein the specific electrical excitation signals are stored beforehand in a lookup table;
**characterized in that**
the specific electrical excitation signals are selected so as to harmonize the haptic feedback for different results, wherein the effects of the relative displacement, brought about in each case by the actuation, between the actuation part (2) and the base (1) is compensated with respect to the drive power of the actuator (7).

2. Operating element according to the preceding claim, wherein the evaluation unit (11) is designed to drive the actuator (7) with a further specific electrical excitation signal if actuation in two detection directions (9) has been detected.

3. Operating element according to either of the preceding claims, wherein the detection means furthermore comprise contact detection means in order to detect contact with the actuation part and the evaluation unit is furthermore designed to vary the electrical excitation signal depending on the result of the contact detection.

4. Operating element according to one of the preceding claims, wherein the actuator (7) is an electromagnetic actuator or an electrodynamic actuator, such as an electromotive actuator.

5. Operating element according to one of the preceding claims, wherein the electrical excitation signal in each case comprises an acceleration square-wave pulse (12) and the specific electrical excitation signals vary only in terms of the duty cycle, even more preferably only in terms of the maximum amplitude (13) of the acceleration square-wave pulse.

6. Operating element according to one of the preceding claims, wherein the electrical excitation signal is a sequence consisting of an acceleration pulse (12) and a brake pulse (14) .

7. Operating element according to one of the preceding claims, wherein the specific electrical excitation signals vary in terms of their maximum amplitude (13) depending on an angular magnitude of an angle enclosed by the detection direction (3, 4, 5) with the excitation direction (10).

8. Operating element according to one of the preceding claims, wherein at least two detection directions (3, 4, 5) are either parallel or orthogonal to the excitation direction.

9. Operating element according to one of the preceding claims, wherein the actuation part (2) is a three-dimensional elevation whose edges define the actuation surfaces.

10. Operating element according to one of the preceding claims, wherein the operating element is a joystick with pivotable or slidable moving mounting of the actuation part (2).

11. Operating element according to either of the two preceding claims, wherein the excitation direction is parallel to a base surface, facing away from the operator, of the actuation part (2).

12. Use of the operating element according to one of the preceding claims in a motor vehicle.

13. Method for haptics generation in an operating element, having the following steps:
providing a base (1), an actuation part (2) mounted movably on the base (1), an electrical actuator (7) in order to drive the actuation part (2) linearly in motion in a predefined excitation direction (10) by way of an electrical excitation signal in order to generate haptic feedback, and detection means (6) for detecting a deflection, brought about by the actuation, of the actuation part (2) in at least two detection directions (3, 4, 5) that each enclose a different angular magnitude with the excitation direction (10) ; detecting actuation in one of the two detection directions; generating a specific electrical excitation signal for the actuator (7) if actuation in one of the two detection directions (3, 4, 5) has been detected; wherein the specific electrical excitation signals are stored beforehand in a lookup table; exciting the actuator (7) with the specific electrical excitation signal (13) if actuation in one of the two detection directions (3, 4, 5) has been detected;
**characterized in that**
the specific electrical excitation signals are selected so as to harmonize the haptic feedback for different results, wherein the effects of the relative displacement, brought about in each case by the actuation, between the actuation part (2) and the base (1) is compensated with respect to the drive power of the actuator (7).

14. Method according to the preceding claim, wherein a further specific electrical excitation signal is generated following detection of simultaneous actuation in two detection directions.

15. Method according to either of preceding Claims 13 and 14, wherein contact with the actuation part is furthermore detected by way of contact detection means and the specific electrical excitation signal is additionally varied depending on the result of the contact detection.

16. Method according to one of preceding Claims 13 to 15, wherein the actuator (7) is an electromagnetic actuator or an electrodynamic actuator, such as an electromotive actuator.

17. Method according to one of preceding Claims 13 to 16, wherein the excitation signal in each case comprises an acceleration square-wave pulse and the specific electrical excitation signals vary only in terms of the duty cycle, even more preferably only in terms of the maximum amplitude of the acceleration square-wave pulse.

18. Method according to one of preceding Claims 13 to 17, wherein the excitation signal is a sequence consisting only of an acceleration pulse (12) and a brake pulse (14) .

## Revendications

1. Élément de commande comprenant :
une base (1) ;
une partie d'actionnement (2) montée de manière mobile sur la base (1) ; un actionneur électrique (7) fixé à la base (1) et agissant sur la partie d'actionnement (2) afin d'entraîner suivant un mouvement linéaire la partie d'actionnement (2) dans un sens d'excitation prédéterminé (10) au moyen d'un signal d'excitation électrique pour générer un retour haptique ;
des moyens (6) de détection d'une déviation de la partie d'actionnement (2) provoquée par l'actionnement dans deux sens de détection (3, 4, 5) qui forment chacun avec le sens d'excitation (10) un angle différent ;
une unité d'évaluation (11) qui est conçue, dans le cas où un actionnement est détecté dans l'un des deux sens de détection (3, 4, 5), pour entraîner l'actionneur avec un signal d'excitation électrique spécifique en fonction de celui des deux sens de détection (3, 4, 5) dans lequel l'actionnement a été effectué, les signaux d'excitation électrique spécifiques étant mémorisés dans une table de correspondance ;
**caractérisé en ce que**
les signaux d'excitation électrique spécifiques sont sélectionnés pour harmoniser le retour haptique pour différents résultats, les effets du coulissement, provoqué par l'actionnement relatif, entre la partie d'actionnement (2) et la base (1), sur la puissance d'entraînement de l'actionneur (7) étant compensés.

2. Elément de commande selon la revendication précédente, l'unité d'évaluation (11) étant conçue, dans le cas où un actionnement dans deux sens de détection (9) a été détecté, pour entraîner l'actionneur (7) avec un autre signal d'excitation électrique spécifique.

3. Elément de commande selon l'une des revendications précédentes, les moyens de détection comprenant en outre des moyens de détection de contact destinés à détecter un contact de la partie d'actionnement et l'unité d'évaluation étant en outre conçue pour faire varier le signal d'excitation électrique en fonction du résultat de la détection de contact.

4. Elément de commande selon l'une des revendications précédentes, l'actionneur (7) étant un actionneur électromagnétique ou un actionneur électrodynamique, tel qu'un actionneur électromoteur.

5. Elément de commande selon l'une des revendications précédentes, le signal d'excitation électrique comprenant à chaque fois une impulsion rectangulaire d'accélération (12) et les signaux d'excitation électrique spécifiques variant exclusivement par rapport au taux d'impulsions, plus préférablement exclusivement par rapport à l'amplitude maximale (13) de l'impulsion rectangulaire d'accélération.

6. Elément de commande selon l'une des revendications précédentes, le signal d'excitation électrique étant une séquence formée d'une impulsion d'accélération (12) et d'une impulsion de freinage (14).

7. Elément de commande selon l'une des revendications précédentes, les signaux d'excitation électrique spécifiques variant quant à leur amplitude maximale (13) en fonction de l'angle formé par le sens de détection (3, 4, 5) avec le sens d'excitation (10).

8. Elément de commande selon l'une des revendications précédentes, au moins deux sens de détection (3, 4, 5) étant parallèles ou orthogonaux au sens d'excitation.

9. Elément de commande selon l'une des revendications précédentes, la partie d'actionnement (2) étant une élévation tridimensionnelle dont les flancs définissent les surfaces d'actionnement.

10. Elément de commande selon l'une des revendications précédentes, l'élément de commande étant une manette à montage pivotant ou coulissant de la partie d'actionnement (2).

11. Elément de commande selon l'une des deux revendications précédentes, le sens d'excitation étant parallèle à une surface de base de la partie d'actionnement (2) qui est opposée à l'opérateur.

12. Utilisation de l'élément de commande selon l'une des revendications précédentes dans un véhicule automobile.

13. Procédé de génération haptique dans un élément de commande, ledit procédé comprenant les étapes suivantes :
fournir une base (1), une partie d'actionnement (2) montée de manière mobile sur la base (1), un actionneur électrique (7) destiné à entraîner la partie d'actionnement (2) suivant un mouvement linéaire dans un sens d'excitation prédéterminé (10) au moyen d'un signal d'excitation électrique pour générer un retour haptique et des moyens (6) de détection d'une déviation de la partie d'actionnement (2) provoquée par l'actionnement dans au moins deux sens de détection (3, 4, 5) formant chacun avec le sens d'excitation (10) un angle différent ;
détecter un actionnement dans l'un des deux sens de détection ;
générer un signal d'excitation électrique spécifique pour l'actionneur (7) si un actionnement dans l'un des deux sens de détection (3, 4, 5) a été détecté, les signaux d'excitation électrique spécifiques étant mémorisés dans une table de correspondance ;
exciter l'actionneur (7) avec le signal d'excitation électrique spécifique (13) si un actionnement a été détecté dans l'un des sens de détection (3, 4, 5) ;
**caractérisé en ce que**
les signaux d'excitation électrique spécifiques sont choisis de manière à harmoniser le retour haptique pour différents résultats, les effets du coulissement relatif, provoqué à chaque fois par l'actionnement, entre la pièce d'actionnement (2) et la base (1), étant compensés par la puissance d'entraînement de l'actionneur (7).

14. Procédé selon la revendication précédente, un autre signal d'excitation électrique spécifique étant généré après la détection d'un actionnement simultané dans deux sens de détection.

15. Procédé selon l'une des revendications 13 à 14 précédentes, un contact de la partie d'actionnement étant en outre détecté à l'aide de moyens de détection de contact et le signal d'excitation électrique spécifique variant en outre en fonction du résultat de la détection de contact.

16. Procédé selon l'une des revendications 13 à 15 précédentes, l'actionneur (7) étant un actionneur électromagnétique ou un actionneur électrodynamique, tel qu'un actionneur électromoteur.

17. Procédé selon l'une des revendications 13 à 16 précédentes, le signal d'excitation comprenant à chaque fois une impulsion rectangulaire d'accélération et les signaux d'excitation électrique spécifiques variant exclusivement par rapport au taux d'impulsions, plus préférablement exclusivement par rapport à l'amplitude maximale (13) de l'impulsion rectangulaire d'accélération.

18. Procédé selon l'une des revendications 13 à 17 précédentes, le signal d'excitation étant une séquence formée exclusivement d'une impulsion d'accélération (12) et d'une impulsion de freinage (14).
